(19) **Europäisches Patentamt**
**European Patent Office**
**Office européen des brevets**

(11) **EP 3 167 262 B1**

(12) **EUROPÄISCHE PATENTSCHRIFT**

(45) Veröffentlichungstag und Bekanntmachung des Hinweises auf die Patenterteilung:
**24.05.2023 Patentblatt 2023/21**

(21) Anmeldenummer: **15734210.6**

(22) Anmeldetag: **09.07.2015**

(51) Internationale Patentklassifikation (IPC):
**G01J 5/04** (2006.01)    **G01J 5/02** (2022.01)
**G01J 5/08** (2022.01)    **G01J 5/20** (2006.01)
**G01J 5/28** (2006.01)    **G01J 5/34** (2022.01)

(52) Gemeinsame Patentklassifikation (CPC):
**G01J 5/046; G01J 5/0225; G01J 5/023;**
**G01J 5/024; G01J 5/0808; G01J 5/20; G01J 5/34;**
G01J 5/28

(86) Internationale Anmeldenummer:
**PCT/EP2015/065719**

(87) Internationale Veröffentlichungsnummer:
**WO 2016/005505 (14.01.2016 Gazette 2016/02)**

(54) **STRAHLUNGSDETEKTOR UND VERFAHREN ZUR HERSTELLUNG EINES STRAHLUNGSDETEKTORS**

RADIATION DETECTOR AND METHOD FOR MANUFACTURING A RADIATION DETECTOR

DÉTECTEUR DE RAYONNEMENT ET PROCÉDÉ DE FABRICATION D'UN DÉTECTEUR DE RAYONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2014 DE 102014213369**

(43) Veröffentlichungstag der Anmeldung:
**17.05.2017 Patentblatt 2017/20**

(73) Patentinhaber: **Fraunhofer-Gesellschaft zur Förderung**
**der angewandten Forschung e.V.**
**80686 München (DE)**

(72) Erfinder:
• **WEILER, Dirk**
  **44627 Herne (DE)**
• **MUCKENSTURM, Kai-Marcel**
  **47138 Duisburg (DE)**
• **HOCHSCHULZ, Frank**
  **48683 Ahaus (DE)**

(74) Vertreter: **Schenk, Markus**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
US-A- 5 912 464    US-A1- 2004 140 428
US-A1- 2008 237 467    US-A1- 2013 234 270

• **RICHARD W. JOHNSON ET AL: "A brief review of atomic layer deposition: from fundamentals to applications", MATERIALS TODAY, Bd. 17, Nr. 5, 1. Juni 2014 (2014-06-01), Seiten 236-246, XP055238259, GB ISSN: 1369-7021, DOI: 10.1016/j.mattod.2014.04.026**
• **NIKLAUS F ET AL: "MEMS-based uncooled infrared bolometer arrays: a review", PROCEEDINGS OF SPIE, S P I E - INTERNATIONAL SOCIETY FOR OPTICAL ENGINEERING, US, Bd. 6836, 12. November 2007 (2007-11-12), Seiten 68360D-1, XP002586083, ISSN: 0277-786X, DOI: 10.1117/12.755128 ISBN: 978-1-62841-730-2 [gefunden am 2008-01-04]**

**EP 3 167 262 B1**

**Beschreibung**

Die vorliegende Erfindung bezieht sich auf einen Strahlungsdetektor, ein Array aus einer Mehrzahl von Strahlungsdetektoren und einem Herstellungsverfahren zum Herstellen eines Strahlungsdetektors, wobei es sich bei dem Strahlungsdetektor beispielsweise um ein Bolometer handeln kann.

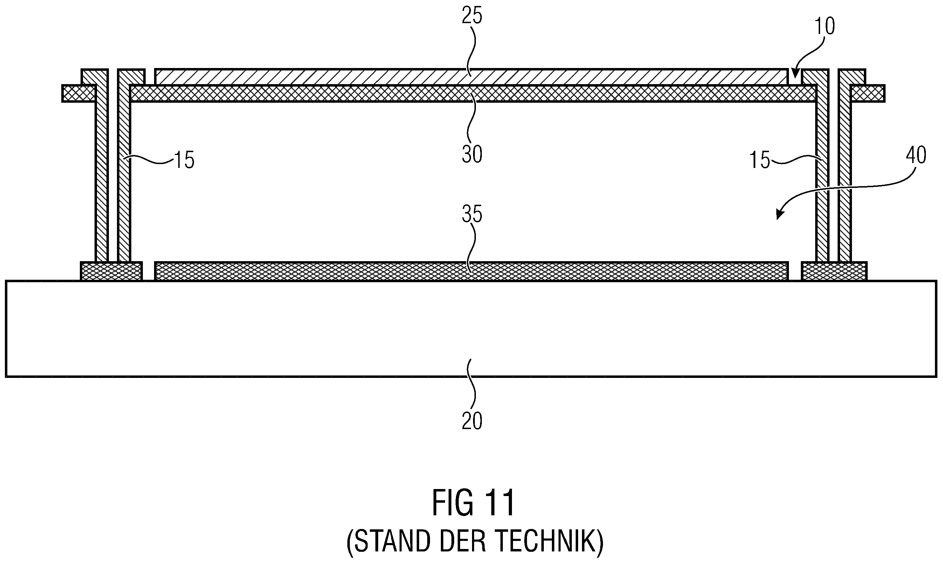

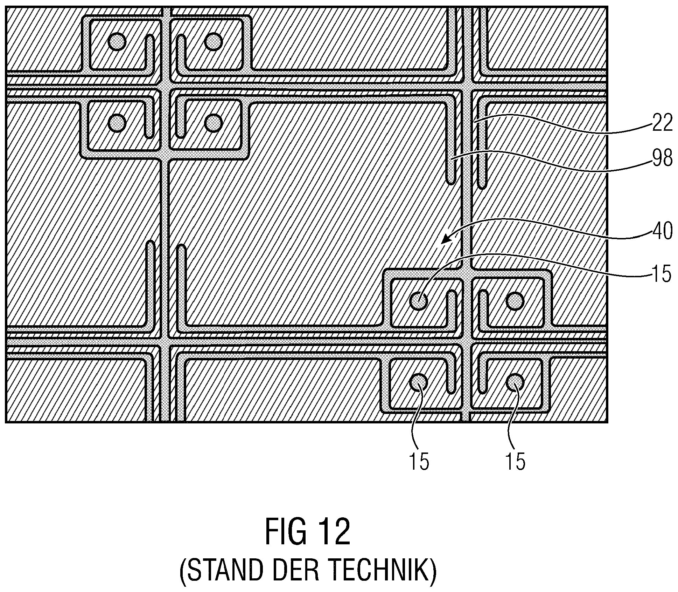

Ungekühlte Widerstandsmikrobolometer (im weiteren Verlauf als Mikrobolometer gekennzeichnet)-Arrays können zur Detektion von ferninfraroter Strahlung (8 μm - 14 μm) verwendet werden und fallen ebenfalls unter den Begriff infrared focal plane arrays (IRFPA). Einzelne Mikrobolometer, wie in Fig. 11 gezeigt, können durch eine Membran 10 gekennzeichnet sein, welche von zwei Metallkontakten 15 mittels dünner Stege über dem Substrat 20 im Vakuum aufgehängt und mittels der Stege 22 (in Fig. 12 gezeigt) thermisch isoliert ist. Grundlegend besteht die Membran aus einer Absorber- 25 sowie einer Sensorschicht 30. Um eine möglichst geringe Reflexion der einfallenden infraroten Strahlung zu gewährleisten, kann der Schichtwiderstand der Absorberschicht 25 an den Wellenwiderstand von Vakuum (ca. 377 Ohm/sq) angepasst sein. Weiterhin kann sich unterhalb der Membran eine Metallschicht (Reflektor) 35 auf dem Substrat 20 befinden, wodurch die zum Teil transmittierte Strahlung zurückreflektiert und anschließend wieder von der oberen Absorberschicht absorbiert wird. Die Kavität 40 zwischen der Absorberschicht 25 und dem unteren Reflektor bildet einen optischen Resonator. Der Abstand kann so gewählt werden, dass der optische Weg (nd) ein ungerades Vielfaches von einem Viertel der zu detektierenden Hauptwellenlänge λ ist, um die Resonatorbedingung zu erfüllen (Gl.1). Der optische Weg setzt sich zusammen aus der Summe der Schichtdicken gewichtet mit den Brechungsindizes der Medien innerhalb der Kavität (Gl.2). Bei einem Körper mit einer Temperatur von z.B. 300 K wäre das Maximum der spektralen Strahldichte bei etwa λ = 10 μm. Hieraus resultiert ein optischer Weg von nd = 2.5 μm (k = 0).

$$nd = (2k+1)\frac{\lambda}{4} \quad (k = 0,\, 1,\, 2\, \ldots) \qquad (Gl.1)$$

$$nd = \sum n_i d_i \qquad (Gl.2)$$

Aufgrund der Absorption der einfallenden infraroten Strahlung kann sich die thermisch isolierte Membran 10 erwärmen, was beispielsweise eine Änderung des elektrischen Widerstandes der Sensorschicht 30 zur Folge haben kann. Die Temperaturänderung der Membran 10 ist dabei abhängig von der thermischen Isolierung mittels der Stege 22 sowie von der Energie der absorbierten Strahlung und ist in der Regel mehrere Größenordnungen kleiner als die Änderung der Strahlertemperatur. Die Widerstandsänderung der Sensorschicht kann dann mit Hilfe einer Ausleseschaltung (engl.: read out circuit, ROIC) bestimmt werden.

Ein entscheidender Performanceindikator für Mikrobolometer ist die sogenannte noise equivalent temperature difference (NETD). Dieser Faktor ist definiert als die Temperaturänderung eines Objektes, die eine Änderung des Messsignales generiert, welches dem Rauschen des Systems entspricht und ist somit ein Maß für die Empfindlichkeit des Sensors (Gl.3).

$$NETD = \frac{4F^2}{A\varepsilon\pi\dfrac{dL}{dT}}\,\frac{\sqrt{\overline{u_n^2}}\,g_{th}}{U_{bias}\,TCR} \qquad (Gl.3)$$

F ist die Blendenzahl, A die Absorberfläche, ε der Emissionskoeffizient, L die Strahldichte und T die Temperatur des Objektes, $\overline{u_n^2}$ das Quadrat der gesamten Rauschspannung, $g_{th}$ der thermische Leitwert und $U_{bias}$ die Biasspannung.

Aus Gl.3 wird ersichtlich, dass die NETD u.a. maßgeblich von der thermischen Isolierung der Membran bzw. dem entsprechenden thermischen Leitwert $g_{th}$ beeinflusst wird. Im Allgemeinen ist die Membran nur durch die Aufhängung an den Metallkontakten thermisch schlecht vom Substrat isoliert. Der resultierende thermische Leitwert ist in diesem Fall nicht ausreichend klein, um eine gute Performance zu erzielen, da die Kontaktröhrchen aus Prozess- und Stabilitätsgründen aus dicken Metallbeschichtungen bestehen und somit die entstehende Wärme in der Membran relativ gut leiten. Der Grenzwert für die NETD sollte beispielsweise bei deutlich weniger als 100mK liegen, kann jedoch auch mehr betragen (kleinere NETD-Werte entsprechen einer besseren Performance).

In herkömmlichen Mikrobolometern wird eine signifikante Verbesserung der thermischen Isolierung bzw. Reduzierung des thermischen Leitwerts durch zusätzliche Verbindungselemente, den Stegen 22, zwischen der aufgehängten Membran und den Metallkontakten realisiert. Der thermische Leitwert der Stege lässt sich bestimmen zu

$$g_{Stege} = 2 \frac{b_{Steg} \, d_{Steg}}{l_{Steg}} \sum \lambda_i \qquad (Gl.4)$$

wobei $\lambda_i$ die thermische Leitfähigkeit der einzelnen Stegmaterialien, $b_{Steg}$ und $d_{Steg}$ die Breite und Dicke der einzelnen Stegmaterialien und $l_{Steg}$ die Länge der Stege ist. Um eine gute thermische Isolierung zu erzielen sollte demnach die Querschnittsfläche der Stege möglichst klein sein und die Stege aus Materialien bestehen, welche eine geringe thermische Leitfähigkeit besitzen. Bezüglich der Wärmeisolierung ist der Anteil der Metallkontakte meist gegenüber den der Stege zu vernachlässigen. Weiterhin kann die thermische Isolierung durch die Wärmestrahlung an die Umgebung beeinflusst werden. Da die Infrarotdetektoren jedoch im Vakuum betrieben werden, ist der Einfluss ebenfalls meist sehr gering, sodass insgesamt die thermische Leitfähigkeit der Stege dominiert.

Der Trend in der Entwicklung der Mikrobolometer bewegt sich hin zu immer kleineren Pixelgrößen für hochauflösende IRFPAs, bei gleichzeitig steigenden Anforderungen an die Performance. Derzeit werden in der Regel Mikrobolometerarrays mit einem Pixelpitch (dt.: Pixelmittenabstand) von 17 $\mu$m gefertigt. Es ist jedoch abzusehen, dass sich in den nächsten Jahren eine neue Generation mit einem Pixelpitch von 12 $\mu$m durchsetzen kann. Eine Skalierung des Pixelpitch von 17 $\mu$m auf 12 $\mu$m bedeutet eine Halbierung der Absorberfläche 25. Generell kann eine Verkleinerung des Pixelpitch aufgrund der Reduzierung der Absorberfläche 25 einen massiven Einfluss auf die Performance der Mikrobolometer haben.

Die effektive Absorberfläche 25 kann aufgrund der benötigten Fläche zur Realisierung der Stege eingeschränkt sein. Abhängig vom Design und Aufbau der Stege bzw. Zielwert des thermischen Leitwerts kann die beanspruchte Fläche der Stege 22 unterschiedlich groß sein. Die Absorberfläche 25 kann jedoch gleichermaßen einen Einfluss auf die Performance haben wie der thermische Leitwert. Wird nun die Pixelfläche um einen gewissen Faktor verkleinert, könnte theoretisch das gesamte Mikrobolometer dementsprechend skaliert werden, sodass die Verhältnisse der einzelnen Flächen (Stege 22, Kontakte 15, Absorberfläche 25) und Abstände zueinander immer gleich bleiben. Der Performanceverlust wäre dann u.a. durch den Skalierungsfaktor bestimmt. Das Problem bei der Skalierung ist jedoch, dass hierbei schnell die Grenzen der Lithographie erreicht werden können. Typischerweise wird für die Herstellung von Mikrobolometer-Arrays eine Stepper-Lithographie mit einer Auflösung von 0,35 $\mu$m verwendet. Oftmals werden bereits in aktuellen aber auch in älteren Mikrobolometergenerationen (17 $\mu$m, 25 $\mu$m, 35 $\mu$m) Strukturgrößen am Limit dieser Auflösung verwendet, wie z.B. bei den Stegbreiten und - Abständen. Zum anderen können auch aus Prozess- und Stabilitätsgründen die Kontaktlöcher und oberen Kontaktflächen nicht beliebig klein skaliert werden, sodass auch hier ein Limit existiert. Aufgrund dieser Problematik beanspruchen besonders die Stegflächen relativ zur Pixelgröße immer mehr Platz bei einem festen thermischen Leitwert (vorgegeben durch Konzept), wodurch die effektive Absorberfläche zusätzlich verkleinert und die Performance stark gemindert wird.

In der Literatur wurde eine weitere Anordnung präsentiert, bei der die Absorberschicht über die gesamte Pixelfläche schirmartig aufgespannt wird. Eine derartige Anordnung wird two-layer- oder auch speziell Umbrella-Design genannt. Hiermit ist es ebenso möglich Bolometer mit einer großen Absorberfläche bei gleichzeitiger guter thermischer Isolierung herzustellen. Der Nachteil hierbei ist jedoch, dass sich die Stege und die Sensorschicht weiterhin in einer Ebene befinden. Die thermische Isolierung ist demnach limitiert durch die freie, zur Verfügung stehende, Pixelfläche. Weiterhin wird die Resonatorbedingung in dem Bereich der Aufhängung des Absorbers nicht erfüllt, was sich negativ auf die Absorption auswirkt. Der Herstellungsprozess von two-layer-Bolometern (Stegen und Absorber nicht in einer Ebene) ist ebenfalls deutlich aufwendiger.

Wünschenswert wäre demnach ein Strahlungsdetektor mit einer verbesserten Membranflächenausbeute.

Diese Aufgabe wird durch den Gegenstand der unabhängigen Patentansprüche gelöst.

Der vorliegenden Erfindung liegt die Idee zugrunde, dass in dem Fall einer Membran eines Strahlungsdetektors, die über Abstandshalter derart über einem Substrat aufgehängt ist, dass die Abstandshalter einen in der Membran gebildeten Strahlungssensor elektrisch kontaktieren, die Abstandshalter zusätzlich als eine thermische Isolation fungieren können, wodurch Einbußen in der Membranflächenausbeute aufgrund von Stegen zur thermischen Isolation reduziert oder sogar eliminiert werde können. Die thermische Isolation kann durch eine sehr dünne und gleichmäßige Schicht eines Kontaktmaterials im Abstandshalter ermöglicht werden, die mittels ALD (Atomic Layer Deposition / Atomlagenbeschichtung) erzeugt wird. Die ALD-Schicht wird beispielsweise auf Seitenkanten einer mit einem Ätzprozess wie z.B. einem DRIE-Prozess, beispielsweise einem Bosch-Prozess oder einem Kryo-Prozess strukturierten Opferschicht erzeugt. Die Bildung von langen und dünnen Abstandshaltern wirkt sich ebenfalls positiv auf die thermische Isolation aus.

Gemäß einem Ausführungsbeispiel kann zwischen dem Substrat und der Membran ein Reflektor angeordnet sein. Dieser kann auf dem Substrat aufliegen oder mittels weiterer Abstandshalter über dem Substrat aufgehängt sein. Hierdurch kann unabhängig von einer Länge der Abstandshalter, an der die Membran aufgehängt ist, der Abstand zwischen Reflektor und Membran so angepasst werden, dass dieser ein ungerades Vielfaches von einem Viertel einer zu detektierenden Hauptwellenlänge beträgt. In anderen Worten ist es möglich, bei Beibehaltung eines gewünschten Membran-Reflektor-Abstandes dennoch die Länge der Abstandshalter groß zu wählen, um eine ausreichende thermische Isolation zu gewährleisten.

Vorteilhafte Ausgestaltungen der vorliegenden Anmeldung sind Gegenstand der abhängigen Patentansprüche. Bevorzugte Ausführungsbeispiele der vorliegenden Anmeldung werden nachfolgend Bezug nehmen auf die beiliegenden Zeichnungen näher erläutert, unter welchen

Fig. 1      eine schematische Darstellung eines Strahlungsdetektors zeigt, wobei eine Membran über Abstandshalter auf einem Substrat aufgehängt ist;

Fig. 2a     eine schematische Darstellung eines Abstandshalters zeigt, der aus zwei Schichten verschiedener Materialien besteht und innen hohl ist;

Fig. 2b     eine schematische Darstellung eines Abstandshalters zeigt, der aus zwei Schichten verschiedener Materialien besteht und innen hohl ist;

Fig. 3      einen Querschnitt eines Strahlungsdetektors zeigt, wobei auf dem Substrat ein Reflektor angeordnet ist und die Kontaktierung sowie die Schichten der Membran gezeigt werden;

Fig. 4      eine schematische Darstellung eines Strahlungsdetektors zeigt, bei dem der Reflektor auf weiteren Abstandshaltern über dem Substrat aufgehängt ist;

Fig. 5      einen Querschnitt eines Strahlungsdetektors zeigt, wobei die Abstandshalter sowie die Membran aus einer Schicht eines Materials bestehen;

Fig. 6      eine schematische Darstellung eines Strahlungsdetektors zeigt, wobei die Membran über Stege an den Abstandshaltern aufgehängt ist;

Fig. 7a     eine schematische Darstellung eines Arrays von Strahlungsdetektoren zeigt;

Fig. 7b     eine schematische Darstellung einer Draufsicht auf die Abstandshalter zeigt;

Fig. 7c     eine schematische Darstellung einer Seitenansicht der Abstandshalter zeigt;

Fig. 8a-h   eine schematische Darstellung von Verfahrensschritte des Herstellungsverfahrens zeigen;

Fig. 9      eine schematische Darstellung eines Strahlungsdetektors zeigt, wobei eine Membran über Abstandshalter auf einem Substrat aufgehängt ist und die Abstandshalter durch eine Oxidschicht stabilisiert sind;

Fig. 10     einen Ausschnitt um einen Kontakt des Substrates zeigt;

Fig. 11     eine schematische Darstellung eines Mikrobolometers als Stand der Technik zeigt;

Fig. 12     eine schematische Darstellung einer Draufsicht auf eine Membran als Stand der Technik zeigt, wobei die Membran über Stege an Metallkontakten aufgehängt ist.

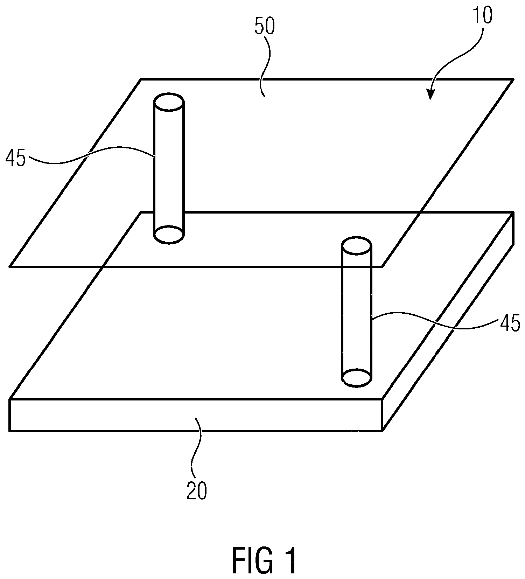

Fig. 1 zeigt einen Strahlungsdetektor mit einem Substrat 20 und eine Membran 10, die über Abstandshalter 45 oberhalb des Substrats 20 aufgehängt ist. In der Membran 10 ist ein Strahlungssensor 50 gebildet, der über die Abstandshalter 45 elektrisch mit dem Substrat 20 kontaktiert und thermisch von dem Substrat 20 isoliert sein kann. Im Folgenden werden nun die Abstandshalter 45, die Membran 10 sowie das Substrat 20 näher beschrieben.

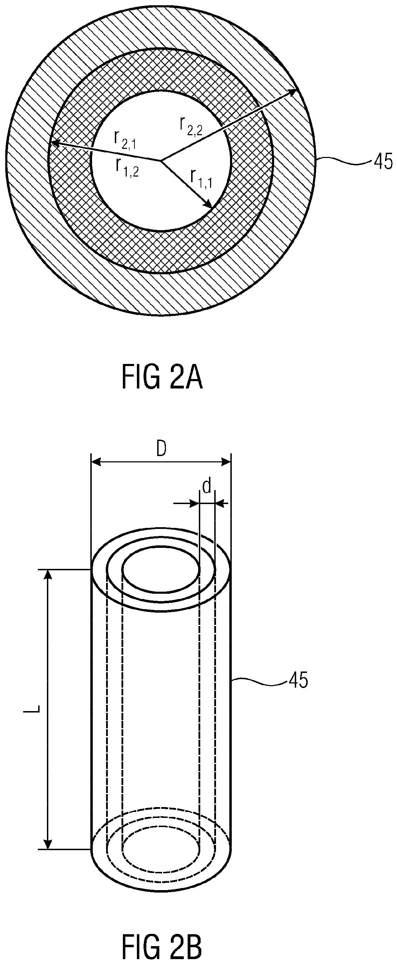

Die Abstandshalter 45 realisieren die thermische Isolierung der Membran 10 vom Substrat 20 bei gleichzeitiger elektrischer Kontaktierung der elektromagnetischen Strahlungsdetektoren, wobei dieselben erfindungsgemäß als lange und dünnbeschichtete Hohlröhrchen ausgeführt sind, die beispielsweise mit Technologien und Prozessen aus der Mikrosystemtechnik hergestellt werden können. Wie oben beschrieben, ist der thermische Leitwert der Kontakte bzw. Abstandshalter, im Vergleich zu den Stegen, aufgrund der dicken Metallbeschichtung bislang sehr groß und trägt daher nicht zur thermischen Isolierung bei. Der Anteil an der thermischen Isolierung beträgt weniger als 2%. Werden die Wände der z.B. runden Kontakte jedoch hinreichend dünn mit einer geeigneten Metallschicht beschichtet, kann daraus ein entsprechender thermischer Leitwert resultieren, welcher vergleichbar mit dem der Stege 22 bzw. sogar deutlich kleiner sein kann. Der thermische Leitwert der Abstandshalter 45 lässt sich analog zu Gl.4 berechnen, wobei in diesem Beispiel wie in Fig. 2 gezeigt, Kreisringe die jeweiligen Querschnittsflächen bilden.

$$g = \frac{\pi}{2l} \sum \lambda_i \left( r_{i,2}^2 - r_{i,1}^2 \right) \qquad\qquad (Gl.4)$$

In Fig. 2a sind beispielhaft die Radien $r_{1,1}$, $r_{1,2}$ bzw. $r_{2,1}$ sowie $r_{2,2}$ dargestellt, jedoch können die Abstandshalter auch aus einer oder einer Vielzahl von Schichten bestehen. Der Term $r_{i,2} - r_{i,1} = d_i$ ist äquivalent zur Dicke der einzelnen Materialien/Schichten innerhalb der Kontakte, $l$ bezeichnet eine Länge der Abstandshalter und $\lambda_i$ bezeichnet die thermische Leitfähigkeit der Schicht $i$. $i$ ist demnach der Index einer Schicht sowie der Laufindex der Summe und besitzt den Wertebereich $1 \leq i \leq N$, wobei N die Anzahl der Schichten ist. N kann jede beliebige natürliche Zahl sein. i nimmt beispielsweise von innen nach außen zu, d.h. i entspricht dem Rang der Schicht von innen nach außen. Der zweite Index der Radien beschreibt den Innenradius (1) sowie den Außenradius (2) einer Schicht. Weiterhin gilt $r_{i,2} = r_{i+1,1}$, wenn die Schichten ohne Zwischenraum aufeinander liegen. Ist der Abstandshalter 45 nur aus einer Schicht ausgebildet (N=1), kann die Summe nur aus einem Element gebildet sein und entfällt somit. Analog können die Abstandshalter anstelle der kreisförmigen Ausführung auch jegliche andere Form aufweisen. Ebenso können die Abstandshalter 45 z.B. mit einem thermisch isolierenden Material gefüllt sein, anstatt innen hohl zu sein. Dann wäre z.B. $r_{1,1}=0$.

Ähnlich zu den Stegen sollten die Abstandshalter 45 ebenfalls möglichst lang sein und aus sehr dünnen Materialien/Schichten bestehen, welche eine geringe thermische Leitfähigkeit aufweisen. Dies geht beispielsweise aus Gl. 4 hervor. Anders ausgedrückt ist es wünschenswert, wenn der Gesamtdurchmesser D der Kontakte, d.h. $r_{N,2}$ (in Fig. 2 als $r_{2,2}$ bezeichnet), möglichst klein gewählt ist, beispielsweise so, dass eine Querschnittsfläche des Abstandshalters 45 kleiner oder gleich $7\mu m^2$, in einem weitern Ausführungsbeispiel kleiner oder gleich $3\mu m^2$ und in einem bevorzugten Ausführungsbeispiel kleiner oder gleich $0,8\mu m^2$ beträgt. Andernfalls können viele dünne Schichten oder wenige dicke Schichten einen großen Durchmesser bilden, was beides einen größeren Leitwert zur Folge hat. Demnach ist auch das Aspektverhältnis der Länge I zum Durchmesser D für einen geringen Leitwert zu beachten. Erfindungsgemäß ist es gleich oder größer 1.

Diese Gesetzmäßigkeiten gelten auch bei anderen als den hier beschriebenen runden Abstandshaltern, jedoch ist hierfür Gl. 4 entsprechend anzupassen. Der Querschnitt der Abstandshalter könnte beispielsweise auch quadratisch oder rechteckig oder beliebig anders geformt sein, wobei solche Querschnitte nicht erfindungsgemäß sind. Allgemein könnte dann für eine Schicht i das Paar $r_{i,2}$ und $r_{i,1}$ so gewählt sein, dass $r_{i,2}^2$ der durch die Außenseite des Querschnitts der Schicht i begrenzten Fläche und $r_{i,2}^2 - r_{i,1}^2$ der Fläche des Querschnitts der Schicht i entspricht. $r_{N,2}$ entspräche dann einer "Breite". Fig. 2b zeigt die weitere Bemaßung der Abstandshalter.

Neben der thermischen Isolierung besteht die zweite Funktion der Abstandshalter darin, dieses Element elektrisch zu kontaktieren. Im Allgemeinen bestehen die Abstandshalter aus einer elektrisch leitenden Schicht. Zum Schutz dieser leitenden Schicht beim Ätzprozess der Opferschicht können optional weitere Schutzschichten ebenfalls mit der Atomlagenbeschichtung abgeschieden werden. Diese Schutzschichten sollten elektrisch sowie thermisch isolierend und stabil gegenüber dem Ätzmedium der Opferschicht sein. Die Dicken aller Schichten der Abstandshalter liegen in einem Bereich von 0,1nm - 1$\mu$m, können jedoch auch dünner oder dicker sein.

Wie oben beschrieben besteht die Membran 10, welche von den Abstandshaltern 45 getragen wird, aus einem Element, welches seine elektrischen Eigenschaften bei Zuführung von Wärme verändert und einer Absorberschicht. Das temperaturempfindliche Element besteht entweder aus einem temperaturabhängigen, elektrischen Widerstand, einer temperaturabhängigen Kapazität, einer temperaturabhängigen Induktivität oder einer Diode (pn-Übergang). Die Absorberschicht kann so gewählt werden, dass dessen Reflexionskoeffizient ähnlich dem von Luft ist, damit ein möglichst kleiner Teil der einfallenden Strahlung reflektiert wird.

Das Substrat kann beispielsweise aus einem Halbleiter oder auch einem anderen Material hergestellt sein. Neben der Grundfläche für die Abstandshalter kann im Substrat auch eine Temperaturausweschaltung integriert sein. Diese ist beispielsweise direkt unter der Membran angeordnet, kann jedoch auch an einer anderen Stelle platziert werden.

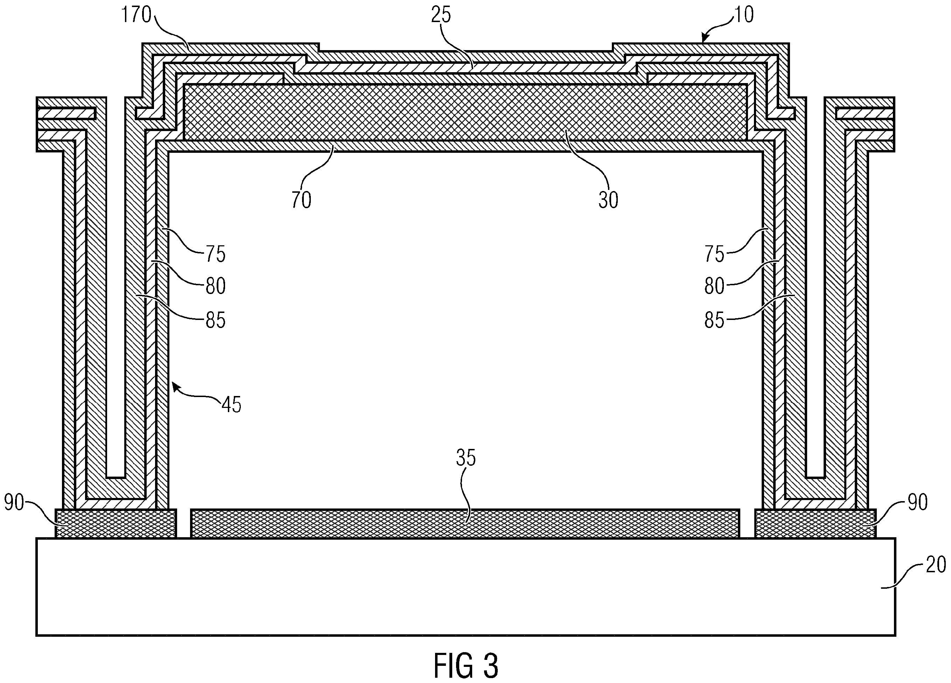

Fig. 3 zeigt ein Anwendungsbeispiel für die Realisierung der thermischen Isolierung und Kontaktierung von elektromagnetischen Strahlungsdetektoren mit Hilfe der Aufhängung. Dabei handelt es sich beispielhaft um den Querschnitt von einem Widerstandsmikrobolometer. Auf dem Substrat 20 ist in diesem Ausführungsbeispiel ein Reflektor 35 angeordnet, der die durch die Membran 10 transmittierte Strahlung auf den Strahlungssensor 45 zurückreflektiert.

Die Membran kann sich aus einer Sensor- 30 und einer Absorberschicht 25 zusammensetzen, welche z.B. aus etwa 300nm a-Si sowie etwa 7nm TiN bestehen kann. Jedoch sind auch andere Materialien sowie Schichtdicken möglich. Unterhalb der Sensor- 30 und oberhalb der Absorberschicht 25 kann sich jeweils eine 10nm dicke Aluminiumoxid

(Al$_2$O$_3$)-Schicht 70 befinden, welche als Schutz beim Ätzen der Opferschicht dienen soll. Wiederum sind auch hier alternativ andere Materialien bzw. ist eine abweichende Schichtdicke möglich.

Die Abstandshalter bestehen in diesem Fall aus drei Schichten 75, 80, 85, welche wie oben beschrieben mit der Atomlagenbeschichtung ALD abgeschieden werden. Das Verfahren zur Herstellung eines Strahlungsdetektors wird im Folgenden noch näher beschrieben. Bei der inneren und äußeren Schicht 75 und 85 kann es sich z.B. ebenfalls um Aluminiumoxid oder auch ein anderes Material handeln. Die innere Schicht 75 hat beispielsweise eine typische Dicke von insgesamt 20 nm und die äußere Schicht 85 beispielsweise eine typische Dicke von 10nm. Diese Oxidschichten sollen die mittlere Metallschicht ebenfalls beim Ätzen der Opferschicht schützen. Zudem kann die innere Al$_2$O$_3$-Schicht 85 als Isolator zwischen den Metallelektroden 90 auf der Sensorschicht und der Absorberschicht 25 dienen. Die mittlere Metallschicht 80, welche als Kontakt zwischen Ausleseschaltung und Sensorschicht dienen kann, besteht beispielsweise aus TiN oder einem anderen elektrisch leitfähigen aber thermisch isolierenden Material und hat beispielsweise eine typische Dicke von 5nm. Jede der Schichten hat dabei eine Dicke von 1$\mu$m oder weniger. Die Schicht kann jedoch auch dicker als 1$\mu$m sein. Der Durchmesser der Abstandshalter kann z.B. 400nm betragen. Allgemein, also z.B. auch im Falle nicht runder Abstandshalter, ist die Querschittsfläche in einem ersten Ausführungsbeispiel kleiner als 7$\mu$m$^2$, in einem zweiten Ausführungsbeispiel kleiner als 3$\mu$m$^2$ oder in einem dritten Ausführungsbeispiel kleiner als 0,8$\mu$m$^2$. Dieselbe kann jedoch auch größer sein. Die Länge ist abhängig von der Resonatorbedingung, typisch sind beispielsweise etwa 6$\mu$m. Wie oben beschrieben, sollte für eine maximale Absorption der einfallenden infraroten Strahlung die Resonatorbedingung erfüllt werden. Aus diesem Grund kann die Länge der Abstandshalter 45 nicht beliebig gewählt werden, sondern sollte nach GI.1 bzw. GI.2 angepasst werden. Allgemein beträgt die Länge der Abstandshalter 45 zwischen Substrat 20 und Membran 10 mindestens 3$\mu$m und maximal 100$\mu$m. Sie kann jedoch auch außerhalb dieses Bereiches liegen.

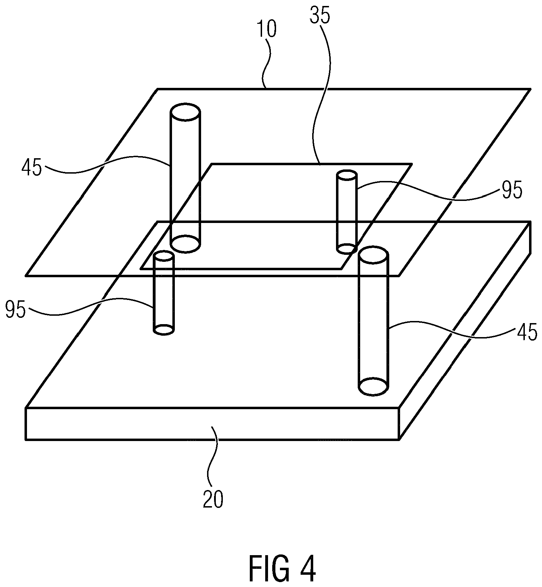

Fig. 4 zeigt ein Ausführungsbeispiel, bei dem die Einschränkung durch die Resonatorbedingung entfällt, indem der Reflektor prozesstechnisch derart realisiert wird, sodass der optische Weg zwischen diesem und der Absorberschicht 25, unabhängig von der Länge der Abstandshalter 45, genau ein Viertel oder ein ganzzahliges Vielfaches von ein Viertel einer zu detektierenden Hauptwellenlänge ist. Dies kann ermöglicht werden, indem der Reflektor mit Hilfe von weiteren Abstandshaltern 95 aufgehängt und somit hochgestellt wird. Die Abstandshalter 95 werden dann so gewählt, dass die Resonatorbedingung erfüllt werden kann.

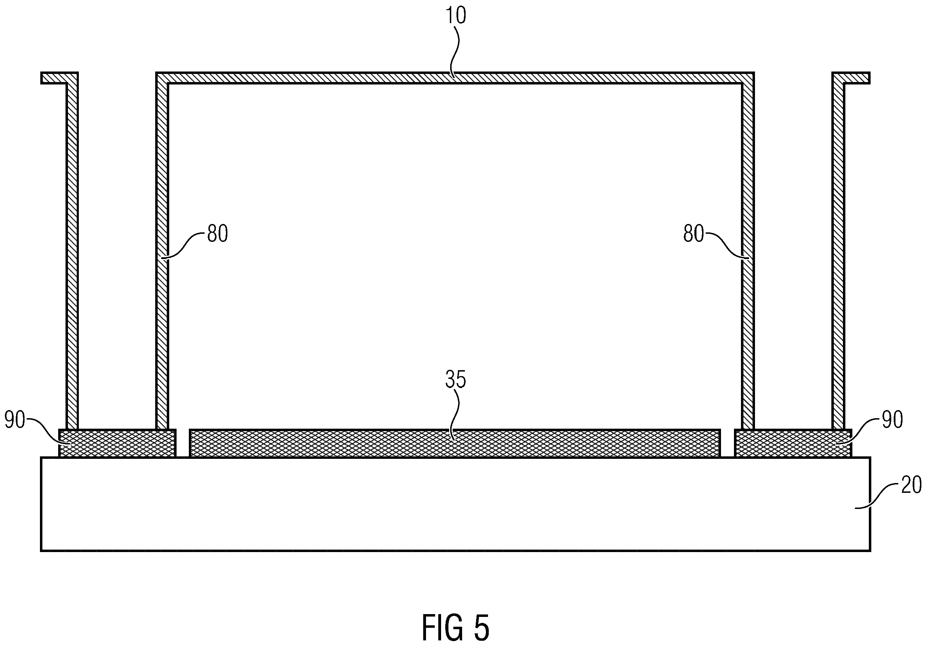

Fig. 5 zeigt ein weiteres Ausführungsbeispiel, bei dem die Abstandshalter 45 sowie die Sensor- 30 und Absorberschicht 25 nur aus einer Schicht 80 eines Materials bestehen. Beispielsweise können die Abstandshalter sehr dünn ausgeführt sein und somit thermisch isolieren wohingegen eine dickere Schicht desselben Materials einen thermischen Sensor darstellen kann. Die Querschnittsfläche kann mit den vorgenannten Querschnittsflächen für mehrlagige Abstandshalter übereinstimmen, jedoch weist der Hohlraum im Inneren der Abstandshalter im Falle eines einlagigen Abstandshalters einen größeren Querschnitt auf. Alternativ kann der Querschnitt der einlagigen Abstandshalter auch kleiner gewählt werden. Sie können jedoch auch einen größeren Querschnitt aufweisen. Optional kann dieses Material auch durch weitere Schichten geschützt werden. Der Herstellungsprozess wird durch diesen Aufbau signifikant vereinfacht.

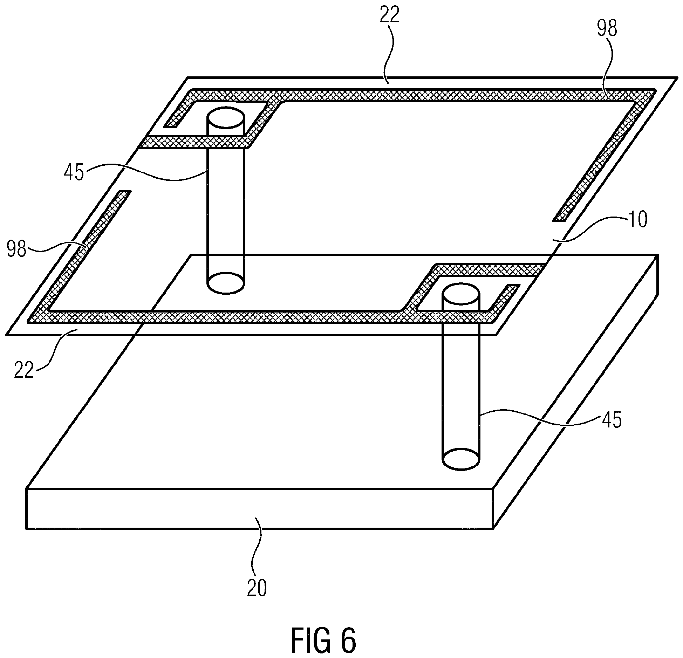

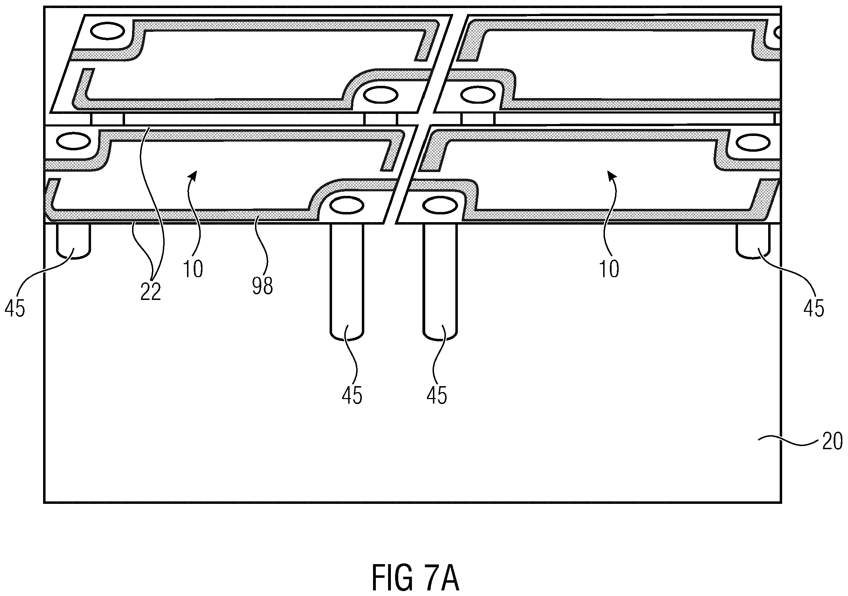

Ein weiterer Anwendungsfall ist in Fig. 6 gezeigt. Ergänzend zur bereits beschriebenen thermischen Isolation der Membran vom Substrat durch die Abstandshalter, kann die Membran über Stege 22 an den Abstandshaltern aufgehängt sein. Der Vorteil liegt hier bei einer weiteren Verbesserung der thermischen Isolierung, allerdings auf Kosten der effektiven Absorberfläche. Jedoch ergeben sich somit zahlreiche Kombinationsmöglichkeiten zwischen Abstandshalter- und Stegdesign, wodurch der Sensor flexibel hergestellt werden kann. Diese Anordnung wird in Abbildung 7a-c anhand einer schematischen Darstellung von einem QVGA Mikrobolometer-Teststrukturen-Array gezeigt. Der Pixelpitch könnte beispielsweise 17 $\mu$m betragen. Die thermische Isolierung wird in diesem Fall durch die hier beschriebenen Abstandshalter sowie konventionellen Stegen realisiert. Die Stege 22 können in einer Ebene mit der Membran 10 liegen und aus einer oder mehreren Schichten, die die Membran 10 bilden, gebildet sein. Von der Membran 10 können die Stege 22 durch Schlitze 98 getrennt sein, bis auf Aufhängungsschnittstellen zwischen Stegen und Membran. Die Stege 22 kontaktieren die Abstandshalter 45 an einem Ende und die Membran 10 an einem anderen Ende. Durch die Isolierung der Abstandshalter 45 können die Stege 22 kürzer und/oder schmaler ausgeführt sein, als wenn diese wie bisher üblich nur der elektrischen Kontaktierung dienten. Weiterhin ist es auch möglich, nur einen ersten Abstandshalter 45 über einen ersten Steg 22 zu kontaktieren und einen zweiten Abstandshalter direkt mit der Membran 10 zu kontaktieren. Die thermische Isolation erfolgt in den genannten Fällen überwiegend über die Abstandshalter 45, d.h. der thermische Leitwert des Steges 22 ist beispielsweise größer als der thermisch Leitwert des Abstandshalters 45, den der Steg 22 mit der Membran verbindet. Es kann jedoch auch vorkommen, dass die Abstandshalter 45 einen größeren thermischen Leitwert aufweisen.

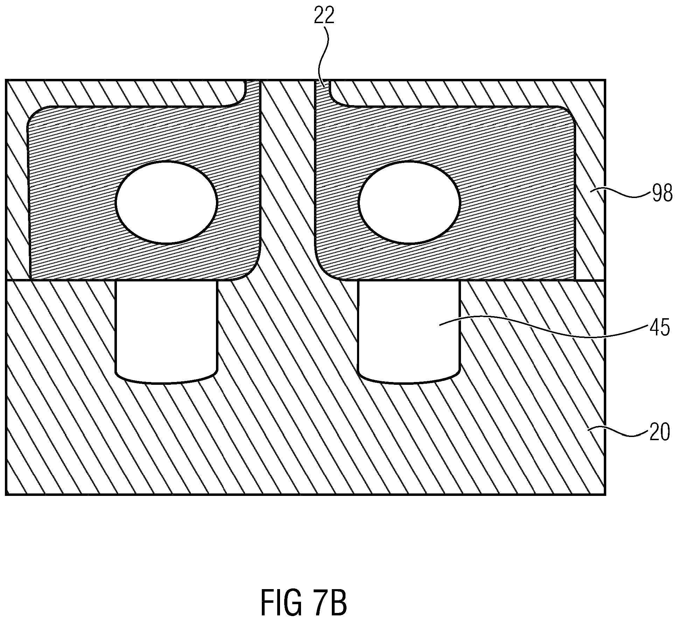

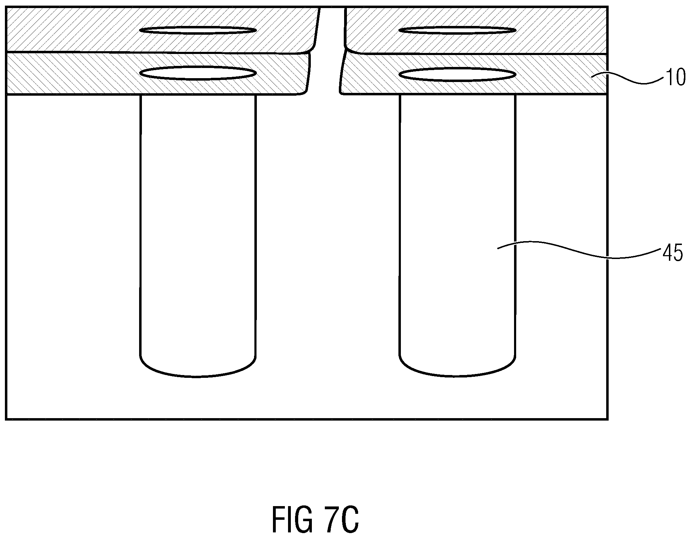

Fig. 7a zeigt ein Array von Strahlungssensoren auf einem Substrat 20. Das Array von Strahlungssensoren kann z.B. einen Bildsensor für thermische Strahlung bilden. Die Membran ist beispielsweise über Stege 22 an den Abstandshaltern 45 aufgehängt. Die Abstandshalter kontaktieren das Substrat elektrisch und isolieren beide thermisch voneinander. Fig. 7b zeigt eine Nahaufnahme der Abstandshalter 45 als Draufsicht und Fig. 7c als Seitenansicht.

Wie bereits in Fig. 7a gezeigt ist auch das Bilden eines Arrays von Strahlungsdetektoren möglich, um z.B. die Intensität mehrerer Strahlungsquellen zu detektieren oder ein zweidimensionales Bild zu erstellen. Hierfür können mehrere Membranen über eine Vielzahl von Abstandshaltern mit einem oder mehreren Substraten kontaktiert und thermisch isoliert werden. Die Temperaturauswerteschaltungen, die z.B. im Substrat angeordnet sein können und sich dabei beispielsweise unterhalb oder neben der Membran befinden, können z.B. elektrisch miteinander verbunden sein, beispielsweise um ein serielles Auslesen zu ermöglichen, oder elektrisch voneinander isoliert sein, beispielsweise um die Informationen der Temperaturauswerteschaltungen parallel auslesen zu können.

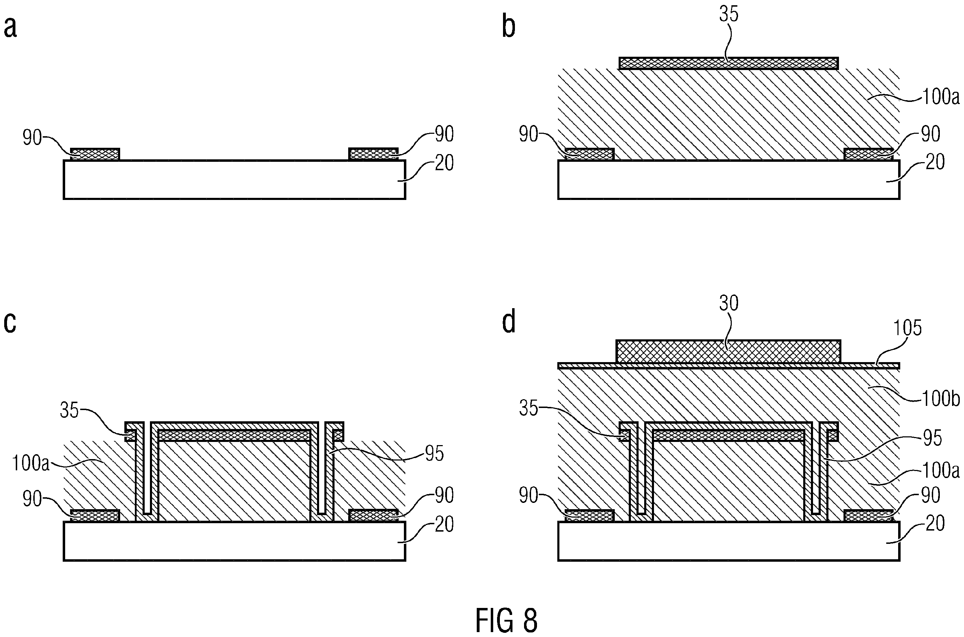

Fig. 8a-h zeigen eine beispielhafte Abfolge des Verfahrens zur Herstellung von Strahlungsdetektoren mit einem an Abstandshaltern 95 aufgehängten Reflektor unter Nutzung der bereits beschriebenen Abstandshalter 45 für die Aufhängung der Membran. Es wird ein möglicher Prozessfluss gezeigt, welcher die Realisierung des oben beschriebenen Mikrobolometers inklusive diesem hochgestellten Reflektor skizziert. Der Reflektor kann beispielsweise aus 200 nm TiN bestehen. Das Innenmaterial der Abstandshalter, welche den Reflektor aufhängen, kann z.B. aus 50 nm $Al_2O_3$ bestehen. Es können jedoch auch andere Materialien verwendet werden und Schichtdicken verwendet werden.

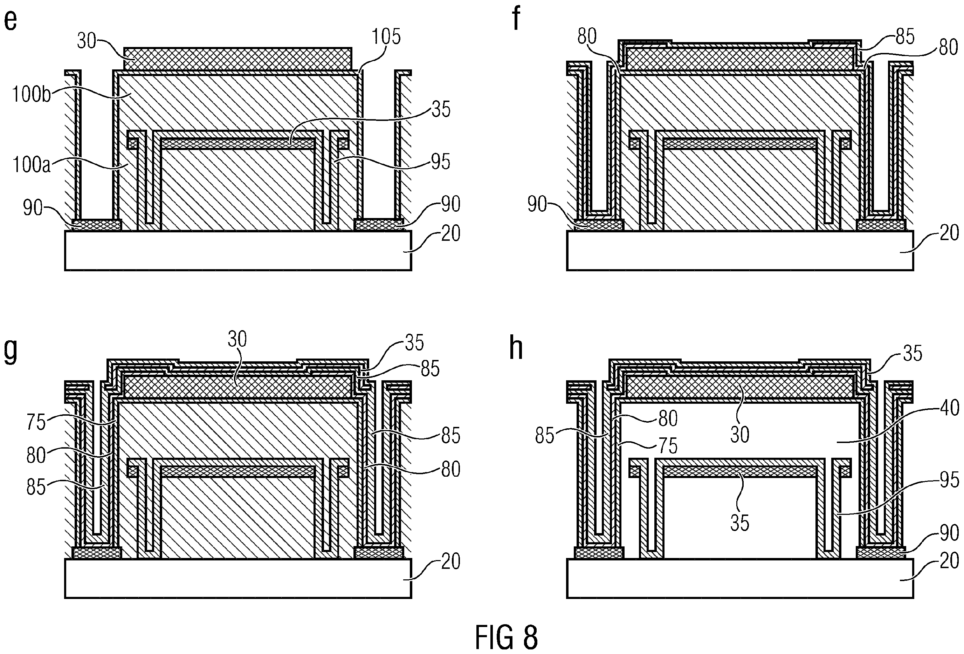

Fig. 8a zeigt das Substrat 20 sowie dessen an der Oberfläche ausgeführten Kontakte 90. Im folgenden Schritt (Fig. 8b) wird eine Opferschicht 100a, z.B. aus a-Si sowie das Reflektormaterial 35, beispielsweise TiN, aufgebracht und im Fall des Reflektormaterials, z.B. einem Metall, bereits strukturiert, d.h beispielsweise auf die vorgegebene Größe gebracht. Anschließend (Fig. 8c) werden die Opferschicht und der Reflektor strukturiert. Dies kann z.B. das Ätzen von Löchern sein, die beispielsweise mit $Al_2O_3$ beschichtet werden und somit nach dem Entfernen der Opferschicht die Abstandshalter 95 bilden, an denen der Reflektor aufgehängt ist. Im folgenden (Fig. 8d) kann eine weitere Opferschicht 100b auf die bestehende Opferschicht 100a sowie den Reflektor aufgebracht werden. Auf diese Opferschicht 100b kann beispielsweise geschützt durch eine Schutzschicht 105, die z.B. aus $Al_2O_3$ bestehen kann, die Sensorschicht 30 der Membran, z.B. eine a-Si Schicht, aufgebracht werden. Fig. 8e beschreibt den Schritt der Strukturierung der Opferschichten 100a und 100b sowie der Schutzschicht 105 der Sensorschicht 30 der Membran 10. Dies beinhaltet z.B. das Ätzen der Opferschicht sowie der Schutzschicht 105 beispielsweise mittels des Bosch-Prozesses, sowie der Abscheidung einer weiteren Schutzschicht 75 auf die Innenkanten der Opferschicht. Nachfolgend (Fig. 8f) wird die Kontaktschicht 80, z.B. eine Schicht TiN, auf die Schutzschicht 75 in den Öffnungen sowie die Kontakte der Membran und des Substrats abgeschieden, gefolgt von einer weiteren Schutzschicht 85. Diese Schutzschicht 85 kann nach dem Aufbringen der Absorberschicht 35 der Membran 10 verbreitert und über die Absorberschicht 35 ausgedehnt werden (Fig. 8g). Abschließend können die Opferschichten 100a sowie 100b entfernt werden (Fig. 8h).

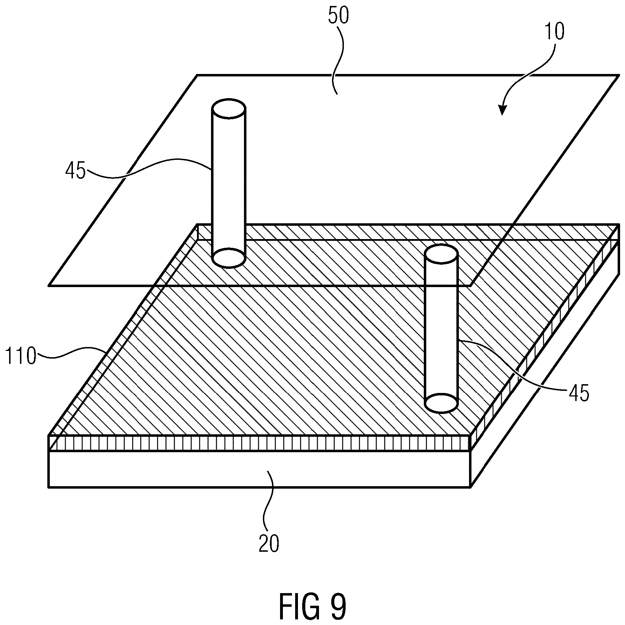

Fig. 9 zeigt ein weiteres Ausführungsbeispiel ähnlich dem Ausführungsbeispiel von Fig. 1. Zur Stabilisierung der Abstandshalter wird vor der Opferschicht eine Oxidschicht 110 auf das Substrat aufgebracht, die beim abschließenden Ätzen sehr selektiv zum Opfermaterial ist. Wird die Opferschicht entfernt, bleibt die Oxidschicht 110 erhalten und stabilisiert die Abstandshalter 45 zusätzlich.

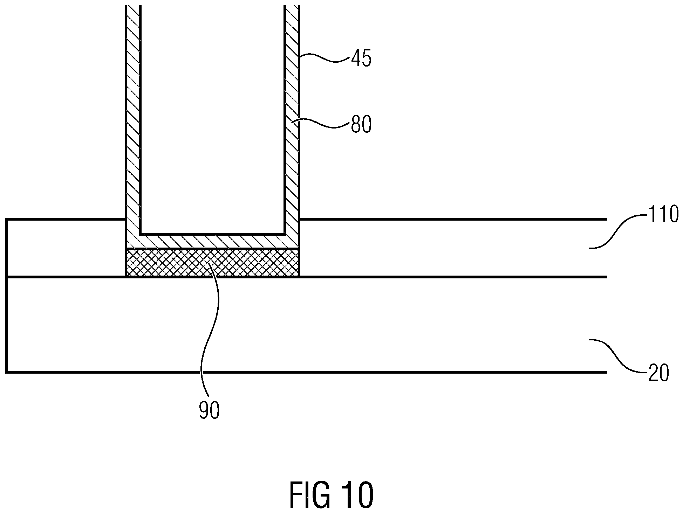

Fig. 10 zeigt einen Ausschnitt um einen Kontakt des Substrates im Querschnitt. Der dargestellte Abstandshalter 45 weist in diesem Fall nur eine Schicht 80 auf, kann aber wie im vorhinein beschrieben auch eine Mehrzahl von Schichten aufweisen. Der Abstandshalter 45 ist auf dem Kontakt 90 des Substrates 20 angeordnet. Der Kontakt 90 kann z.B. aus Aluminium, Wolfram oder einem anderen elektrisch leitfähigen Material ausgeführt sein. Aufgrund des großen Aspektverhältnisses der Abstandshalter 45 und eines geeigneten Verfahrens zum Entfernen überflüssigen Materials des Abstandshalters auf der Opferschicht, z.B. eines Ätzprozesses, kann auf dem Grund bzw. dem Boden des Abstandshalters eine Materialschicht des Abstandshalters zurückbleiben. Diese kann die Kontaktfläche mit dem Kontakt 90 erhöhen und somit zu einer besseren und sicheren Kontaktierung sowie einem festeren Stand des Abstandshalters beitragen. Wie bereits in Fig. 9 gezeigt kann zwischen dem Substrat und der Opferschicht 110 eine weitere Materialschicht, z.B. die eines Oxids, derart aufgebracht werden, dass nach dem Entfernen, z.B. dem Ätzen, der Opferschicht eine Kante oder ein Kragen um den Grund bzw. den Boden des Abstandshalters zurückbleibt und den Abstandshalter somit stabilisiert.

Mit anderen Worten werden die Abstandhalter mit Hilfe eines Opferschichtprozesses hergestellt. Dabei wird zunächst ein Loch in die Opferschicht geätzt und im Anschluss beschichtet. Für das Ätzen des Loches kann z.B. der sog. Boschprozess verwendet werden, da es hiermit möglich ist steile Kantenwinkel bei großen Aspektverhältnissen zu erzeugen. Die Schichten werden mittels Atomlagenbeschichtung ALD abgeschieden, sodass selbst bei den erwähnten steilen Kantenwinkeln die geätzten Löcher bedeckt sein können, d.h. dass die gesamte Fläche des in die Opferschicht geätzten Loches gleichmäßig dünn beschichtet werden kann. Die Toleranz sollte dabei weniger als 50nm betragen. Alternativ kann die Toleranz auch kleiner als 25nm oder kleiner als 5nm sein. Im Weiteren können die abgeschiedenen Schichten je nach Herstellungsprozess strukturiert werden. Zuletzt folgt dann die Entfernung der Opferschicht, sodass die gefertigten Abstandshalter frei stehen. Entgegen der bisher ausschließlich gezeigten Ausführungsbeispiele mit zwei Abstandshaltern ist es auch möglich diese und weitere Ausführungsbeispiele mit einer Vielzahl von Abstandshaltern zu schaffen. Dies gilt für beide genannten Abstandshalter 45 sowie 95. Entgegen der bisher gezeigten Abstandshalter 45 und 95 in den Ecken der Membran und des Reflektors, können diese auch an anderen Stellen, z.B. mittig zwischen den Ecken angeordnet sein. Weiterhin ist es auch möglich Abstandshalter beispielsweise aus einem thermisch isolierenden Material, z.B. einem Oxid wie z.B. Aluminiumoxid als zusätzliche Stütze zur mechanischen Stabilisierung zu realisieren, ohne dass diese eine elektrische Funktionalität aufweisen.

Neben dem beschriebenen Verfahren und den verwendeten Materialien und Prozessen sind auch weitere Lösungen denkbar. Wird der Reflektor beispielsweise auf dem Substrat angebracht, ist nur eine Opferschicht nötig, auf die die Membran aufgebracht sowie in die Abstandshalter abgeschieden werden können. Ebenso ist es möglich andere Materialien für die Schutzschichten 75 sowie 85 oder die Kontaktschicht 80 zu verwenden oder nur eine oder gar keine Schutzschichten vorzusehen. In diesem Fall sollte die Kontaktschicht aus einem Material bestehen, dass beim Entfernen, z.B. dem Ätzen, der Opferschicht nicht angegriffen wird. Weiterhin kann auch die Membran sowie die Kontaktschicht aus demselben Material und einer Schicht bestehen, die aber auch von einer Schutzschicht umgeben sein kann.

Aufgrund der hier beschriebenen Erfindung ist es möglich den relativen Flächenanteil des Absorbers bei gegebenem Pixelpitch zu maximieren, da laterale Stege, welche bislang Hauptbestandteil der thermischen Isolierung waren, komplett entfallen bzw. deutlich reduziert werden können. Diese Platzeinsparung kann genutzt werden, um z.B. die effektive Absorberfläche zu vergrößern. Die thermische Isolierung kann nach Gl. 4 über die einzelnen Schichtdicken, Grundradius 65 und Länge der Abstandshalter 45 flexibel eingestellt werden. Das jeweilige Maximum ist begrenzt durch die Stabilität der Abstandshalter 45 und die Resonatorbedingung. Somit ist es sogar möglich einen dementsprechenden deutlich kleineren thermischen Leitwert, als es bisher mit den Stegen möglich war, zu erzielen. Aufgrund dieser beiden Faktoren kann die Performance von Strahlungsdetektoren wie z.B. aktuellen Mikrobolometern signifikant gesteigert werden. Die Vorteile von einer sehr großen Absorberfläche bei einer gleichzeitigen guten thermischen Isolierung können auch besonders bei der Skalierung des Pixelpitches zu kleineren Werten einen erheblichen Nutzen bringen. Aufgrund der kleinen Abmessungen können die Abstandshalter auch als Nanotubes (dt.: Nanoröhren) bezeichnet werden. Diese ermöglichen eine Vergrößerung der zur Verfügung stehenden Absorberfläche bei gleichem thermischen Leitwert durch eine Reduzierung der Stegfläche, wobei der thermische Leitwert gleichzeitig unabhängig einstellbar ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Strahlungsdetektor mit einem Substrat (20) und einer Membran (10), die über Abstandshalter (45) oberhalb des Substrats (20) aufgehängt ist,

   wobei die Abstandshalter (45) einen in der Membran (10) gebildeten Strahlungssensor (50) elektrisch kontaktieren sowie die Membran (10) gegenüber dem Substrat (20) thermisch isolieren,
   wobei die Abstandshalter (45) als lange und dünnbeschichtete Hohlröhrchen ausgeführt sind, wobei die Abstandshalter mittels Atomlagenbeschichtung ALD und einem Opferschichtverfahren hergestellt werden,
   wobei ein Aspektverhältnis der Länge I zum Durchmesser D des Abstandshalters (45) größer oder gleich 1 ist, und
   wobei die Membran (10) steglos an den Abstandshaltern (45) aufgehängt ist.

2. Strahlungsdetektor gemäß einem der vorigen Ansprüche, wobei zwischen dem Substrat (20) und der Membran (10) ein Reflektor (35) angeordnet ist, und der Reflektor (35) mittels weiteren Abstandshaltern (95) zwischen dem Substrat (20) und der Membran (10) aufgehängt ist.

3. Strahlungsdetektor gemäß Anspruch 2, wobei der Abstand zwischen dem Reflektor (35) und der Membran ein ungerades, ganzzahliges Vielfaches von ein Viertel einer zu detektierenden Hauptwellenlänge beträgt.

4. Strahlungsdetektor gemäß einem der vorigen Ansprüche, wobei eine Wand der Abstandshalter (45) aus einer Mehrzahl von Schichten verschiedener Materialien besteht.

5. Strahlungsdetektor gemäß einem der vorigen Ansprüche, wobei eine Querschnittsfläche der Abstandshalter (45) über eine gesamte Länge kleiner oder gleich 7 $\mu m^2$ oder kleiner oder gleich 3 $\mu m^2$ oder kleiner oder gleich 0,8 $\mu m^2$ ist.

**6.** Strahlungsdetektor gemäß einem der vorherigen Ansprüche, wobei eine Wand der Abstandshalter aus einer Schicht eines einzigen Materials besteht.

**7.** Strahlungsdetektor gemäß einem der vorigen Ansprüche, wobei das Verhältnis einer Länge zu einer Breite des Abstandshalters (45) größer oder gleich 10 oder größer oder gleich 5 oder größer oder gleich 1 ist.

**8.** Strahlungsdetektor gemäß einem der vorigen Ansprüche, wobei das Substrat eine Temperaturauswertungsschaltung beinhaltet.

**9.** Verfahren zur Herstellung eines Strahlungsdetektors mit einem Substrat und einer Membran, die über Abstandshalter (45) oberhalb des Substrats (20) aufgehängt ist,

wobei die Abstandshalter (45) mittels Atomlagenbeschichtung ALD und einem Opferschichtverfahren hergestellt werden, sodass die Abstandshalter (45) einen in der Membran (10) gebildeten Strahlungssensor (50) elektrisch kontaktieren sowie die Membran (10) gegenüber dem Substrat (20) überwiegend thermisch isolieren,
wobei die Abstandshalter (45) als lange und dünnbeschichtete Hohlröhrchen ausgeführt werden,
wobei ein Aspektverhältnis der Länge l zum Durchmesser D des Abstandshalters (45) größer oder gleich 1 ist, und
wobei die Membran (10) steglos an den Abstandshaltern (45) aufgehängt wird.

**Claims**

**1.** Radiation detector with a substrate (20) and a membrane (10) suspended above the substrate (20) by spacers (45),

wherein the spacers (45) electrically contact a radiation sensor (50) formed in the membrane (10) and thermally insulate the membrane (10) from the substrate (20),
wherein the spacers (45) are configured as long and thinly coated hollow tubes, wherein the spacers are manufactured by means of atomic layer deposition ALD and a sacrificial layer method,
wherein an aspect ratio of the length l to the diameter D of the spacer (45) is greater than or equal to 1, and
wherein the membrane (10) is suspended on the spacers (45) without ridges.

**2.** Radiation detector according to any one of the preceding claims, wherein a reflector (35) is disposed between the substrate (20) and the membrane (10), and wherein the reflector (35) is suspended between the substrate (20) and the membrane (10) by further spacers (95).

**3.** Radiation detector according to claim 2, wherein the distance between the reflector (35) and the membrane is an odd, integral multiple of a quarter of a main wavelength to be detected.

**4.** Radiation detector according to any one of the preceding claims, wherein a wall of the spacers (45) consists of a plurality of layers of different materials.

**5.** Radiation detector according to any one of the preceding claims, wherein a cross-sectional area of the spacers (45) is smaller than or equal to $7\mu m^2$ or smaller than or equal to $3\mu m^2$ or smaller than or equal to $0.8\mu m^2$ across a total length.

**6.** Radiation detector according to any one of the preceding claims, wherein a wall of the spacers consists of one layer of a single material.

**7.** Radiation detector according to any one of the preceding claims, wherein the ratio of a length to a width of the spacer (45) is larger than or equal to 10 or larger than or equal to 5 or larger than or equal to 1.

**8.** Radiation detector according to any one of the preceding claims, wherein the substrate includes a temperature evaluation circuit.

**9.** Method for manufacturing a radiation detector with a substrate and a membrane suspended above the substrate (20) by spacers (45),

EP 3 167 262 B1

wherein the spacers (45) are manufactured by atomic layer deposition ALD and a sacrificial layer method so that the spacers (45) electrically contact a radiation sensor (50) formed in the membrane (10) and predominantly thermally insulate the membrane (10) from the substrate (20),
wherein the spacers (45) are configured as long and thinly coated hollow tubes,
wherein an aspect ratio of the length I to the diameter D of the spacer (45) is greater than or equal to 1, and
wherein the membrane (10) is suspended on the spacers (45) without ridges.

**Revendications**

1. Détecteur de rayonnement avec un substrat (20) et une membrane (10) qui est suspendue par l'intermédiaire d'entretoises (45) au-dessus du substrat (20),

   dans lequel les entretoises (45) entrent électriquement en contact avec un capteur de rayonnement (50) formé dans la membrane (10) ainsi qu'isolent thermiquement la membrane (10) par rapport au substrat (20),
   dans lequel les entretoises (45) sont réalisées sous forme de tubes creux longs et à revêtement mince, dans lequel les entretoises sont fabriquées au moyen d'un revêtement de couche atomique ALD et d'un procédé de couche sacrificielle,
   dans lequel un rapport d'aspect entre la longueur 1 et le diamètre D de l'entretoise (45) est supérieur ou égal à 1, et
   dans lequel la membrane (10) est suspendue sans traverse aux entretoises (45).

2. Détecteur de rayonnement selon l'une des revendications précédentes, dans lequel est disposé, entre le substrat (20) et la membrane (10), un réflecteur (35), et le réflecteur (35) est suspendu au moyen d'autres entretoises (95) entre le substrat (20) et la membrane (10).

3. Détecteur de rayonnement selon la revendication 2, dans lequel la distance entre le réflecteur (35) et la membrane est un multiple entier impair d'un quart d'une longueur d'onde principale à détecter.

4. Détecteur de rayonnement selon l'une des revendications précédentes, dans lequel une paroi des entretoises (45) est constituée d'une pluralité de couches de différents matériaux.

5. Détecteur de rayonnement selon l'une des revendications précédentes, dans lequel une section transversale des entretoises (45) est, sur une longueur totale, inférieure ou égale à 7 $\mu$m$^2$ ou inférieure ou égale à 3 $\mu$m$^2$ ou inférieure ou égale à 0,8 $\mu$m$^2$.

6. Détecteur de rayonnement selon l'une des revendications précédentes, dans lequel une paroi des entretoises est constituée d'une couche d'un seul matériau.

7. Détecteur de rayonnement selon l'une des revendications précédentes, dans lequel le rapport entre une longueur et une largeur de l'entretoise (45) est supérieur ou égal à 10 ou supérieur ou égal à 5 ou supérieur ou égal à 1.

8. Détecteur de rayonnement selon l'une des revendications précédentes, dans lequel le substrat contient un circuit d'évaluation de température.

9. Procédé de fabrication d'un détecteur de rayonnement avec un substrat et une membrane qui est suspendue par l'intermédiaire d'entretoises (45) au-dessus du substrat (20),

   dans lequel les entretoises (45) sont fabriquées au moyen d'un revêtement de couche atomique ALD et d'un processus de couche sacrificielle, de sorte que les entretoises (45) entrent électriquement en contact avec un capteur de rayonnement (50) formé dans la membrane (10) ainsi qu'isolent principalement thermiquement la membrane (10) par rapport au substrat (20),
   dans lequel les entretoises (45) sont réalisées sous forme de tubes creux longs et à revêtement mince,
   dans lequel un rapport d'aspect entre la longueur 1 et le diamètre D de l'entretoise (45) est supérieur ou égal à 1, et
   dans lequel la membrane (10) est suspendue sans traverse aux entretoises (45).

FIG 1

FIG 2A

FIG 2B

FIG 3

FIG 4

EP 3 167 262 B1

FIG 5

FIG 6

FIG 7A

FIG 7B

EP 3 167 262 B1

FIG 7C

FIG 8

FIG 8

EP 3 167 262 B1

FIG 9

FIG 10

**FIG 11**
**(STAND DER TECHNIK)**

**FIG 12**
(STAND DER TECHNIK)